# EUROPEAN PATENT APPLICATION

(11) **EP 4 617 561 A1**
(43) Date of publication of application: **17.09.2025**
(21) Application number: 23888717.8
(22) Date of filing: 07.11.2023
(51) Int. Cl.: F21Y 115/10, F21V 9/40, F21S 41/143, F21S 41/153, F21S 41/40, F21S 41/663, F21S 41/68, F21W 102/15, F21W 102/155, F21W 102/16

(54) **VEHICLE HEADLAMP**

(30) Priority: 11.11.2022 JP 2022181093
(71) Applicant: Koito Manufacturing Co., Ltd., Shinagawa-ku, Tokyo 141-0001 (JP)
(72) Inventor: MANO, Mitsuharu, Shizuoka-shi, Shizuoka 424-8764 (JP)
(74) Representative: Hoffmann Eitle
(86) International application number: PCT/JP2023/040122
(87) International publication number: WO 2024/101370

(57) **Abstract**

A vehicle headlamp (1) includes an image generation unit (20) that generates a low-beam image (21) by superimposing a low mask image (31) including a light-shielding image (32) having a lower edge (32ed) corresponding to a cutoff line (CL) of a light distribution pattern (PL) of a low beam and brightness of zero, on an upper portion of a low base image (34) as the low-beam image (21) representing the light distribution pattern (PL) of a low beam by superimposing the low mask image (31) on the upper portion, and a light source unit (12) that emits light based on the low-beam image (21), in which the image generation unit (20) generates the low-beam image (21) by superimposing the low mask image (31) on the upper portion of the low base image (34) and changing the low mask image (31) such that a part (32EP) corresponding to an elbow point (EP) in a lower edge (32ed) of the light-shielding image (32) moves in a predetermined direction.

## Description

### Technical Field

The present invention relates to a vehicle headlamp.

### Background Art

As a vehicle headlamp represented by an automobile headlight, a vehicle headlamp that changes a light distribution pattern of emitted light is known, and Patent Literature 1 below discloses such a vehicle headlamp.

A vehicle headlamp disclosed in Patent Literature 1 below includes a light distribution changeable lamp including a light emitting diode (LED) array and a light distribution controller that controls the light distribution changeable lamp. The light distribution controller cuts out a part of a reference image representing a predetermined light distribution pattern in which a light distribution pattern of a low beam is widened in the right-left direction, and controls the light distribution changeable lamp based on the cut-out image. The cutoff line of the light distribution pattern of the low beam has an elbow point. Then, the light distribution controller changes the position at which cut-out from the reference image is performed, thereby changing the light distribution pattern of the low beam such that the elbow point moves.

[Patent Literature 1] WO 2021/251372 A1

### Summary of Invention

The visibility is improved by moving a characteristic portion at the upper edge of the light distribution pattern, such as the elbow point, in accordance with the traveling situation of a vehicle, for example, the curvature of the road, and the like. Here, in the light distribution pattern of the low beam, the brightness tends to decrease as the distance from the elbow point increases, and the vicinity of both the right and left edges and the vicinity of the lower edge tend to become dark. Therefore, it is conceivable to make the vicinity of both the right and left edges and the vicinity of the lower edge dark even in the predetermined light distribution pattern in the vehicle headlamp of Patent Literature 1 above. In such a case, when the position at which cut-out from the reference image is performed moves to one side in the right-left direction, there is a concern that the brightness in the vicinity of the edge on one side in the right-left direction in the cut-out image decreases, and the brightness in the vicinity of the edge on one side in the right-left direction in the light distribution pattern of the emitted low beam decreases. Therefore, there is a demand for preventing the decrease in the brightness when the light distribution pattern is changed such that the characteristic portion of the upper edge such as the elbow point moves.

Therefore, an object of the present invention is to provide a vehicle headlamp capable of suppressing a decrease in brightness when the light distribution pattern is changed such that the characteristic portion of the upper edge moves.

In order to achieve the above object, according to the present invention, a vehicle headlamp includes an image generation unit that generates an image by superimposing a mask image on an upper portion of a base image as the image representing a predetermined light distribution pattern by superimposing the mask image on the upper portion, the mask image including a light-shielding image that has a brightness of zero, and has a lower edge corresponding to an upper edge of the predetermined light distribution pattern in which the upper edge has a predetermined characteristic portion, and a light source unit that emits light based on the image generated by the image generation unit, the light source unit in which a plurality of light emission units capable of individually changing a light quantity of emitted light are arranged in a matrix. The image generation unit generates the image by superimposing the mask image on the upper portion of the base image and changing the mask image such that a part corresponding to the predetermined characteristic portion in the lower edge of the light-shielding image moves in a predetermined direction.

In this vehicle headlamp, the image generation unit changes the mask image such that a part corresponding to a predetermined characteristic portion in the lower edge of the light-shielding image moves in a predetermined direction. Therefore, according to this vehicle headlamp, the predetermined light distribution pattern can be changed such that the predetermined characteristic portion moves in the predetermined direction. In addition, portions other than the upper edge in the predetermined light distribution pattern are based on the base image, and the base image does not change even if the mask image changes. Therefore, according to this vehicle headlamp, even if the predetermined light distribution pattern changes such that the predetermined characteristic portion moves in the predetermined direction, it is possible to suppress a decrease in brightness in the vicinity of both edges in the right-left direction of the predetermined light distribution pattern or in the vicinity of the lower edge.

The image generation unit may generate the mask image and superimpose the mask image on the base image.

According to such a configuration, the predetermined light distribution pattern can be changed without including a memory that stores the mask image.

The predetermined light distribution pattern may be a light distribution pattern of a low beam, and the predetermined characteristic portion may be an elbow point.

According to such a configuration, the light distribution pattern of the low beam can be changed such that the elbow point moves.

In this case, the upper edge may include an inclined portion that extends obliquely upward from the elbow point, a first horizontal portion that extends in a horizontal direction from the elbow point, and a second horizontal portion that extends in the horizontal direction from an end of the inclined portion opposite to the elbow point, the light-shielding image may include a first part of a quadrangle having, as a side, a part corresponding to the first horizontal portion in the lower edge of the light-shielding image, a second part of a quadrangle having, as a side, a part corresponding to the second horizontal portion in the lower edge of the light-shielding image, and a third part of a quadrangle that is connected to the first part and the second part and has, as a side, a part corresponding to the inclined portion in the lower edge of the light-shielding image, and the image generation unit may generate the mask image and superimposes the mask image on the base image.

According to such a configuration, the light-shielding image of the low mask image can be formed by forming the first part, the second part, and the third part each being a quadrangle. Therefore, according to such a configuration, the light-shielding image can be easily formed, and the calculation load of the image generation unit can be reduced.

The predetermined light distribution pattern may be a light distribution pattern of a high beam including a lower light distribution pattern and an upper light distribution pattern that is connected to an upper edge of the lower light distribution pattern and has a width in a right-left direction narrower than that of the lower light distribution pattern, and the predetermined characteristic portion may be a protruding portion as an outer edge of the upper light distribution pattern.

According to such a configuration, the light distribution pattern of a high beam can be changed such that the upper light distribution pattern in which the outer edge is a protruding portion moves in a predetermined direction.

The mask image may include a blurred image that extends along the lower edge of the light-shielding image and has brightness decreasing from a side opposite to the light-shielding image toward the light-shielding image side.

In this vehicle headlamp, a blurred region that extends along the upper edge and has brightness decreasing from a side opposite to an upper edge side toward the upper edge side is formed in the predetermined light distribution pattern. Therefore, as compared with the case where the blurred region is not formed, it is possible to suppress the upper edge from being clearly viewed, and to suppress a driver of a vehicle from feeling annoyed with the movement of the predetermined characteristic portion.

In addition, according to the present invention, a vehicle headlamp includes a lamp unit that emits light having a predetermined light distribution pattern in which an upper edge has a predetermined characteristic portion, and a control unit that controls the lamp unit, in which the control unit controls the lamp unit to move the predetermined characteristic portion in a predetermined direction without changing brightness of both right and left edge portions and a lower edge portion in the predetermined light distribution pattern.

As described above, according to the present invention, it is possible to provide a vehicle headlamp capable of suppressing a decrease in brightness when the light distribution pattern is changed such that the predetermined characteristic portion of the upper edge moves.

### Brief Description of Drawings

[FIG. 1] FIG. 1 is a plan view conceptually illustrating a vehicle including a vehicle headlamp according to an embodiment of the present invention.
[FIG. 2] FIG. 2 is a cross-sectional view schematically illustrating a lamp portion.
[FIG. 3] FIG. 3 is a front view schematically illustrating a light source unit illustrated in FIG. 2.
[FIG. 4] FIG. 4 is a view for describing a low mask image and a low base image.
[FIG. 5] FIG. 5 is a view for describing a high mask image and a high base image.
[FIG. 6] FIG. 6 is a control flowchart of a control unit according to the present embodiment.
[FIG. 7] FIG. 7 is a view for describing generation of a low-beam image.
[FIG. 8] FIG. 8 is a view illustrating an example of a light distribution pattern of a low beam in the present embodiment.
[FIG. 9] FIG. 9 is a view illustrating an example of movement of the low mask image.
[FIG. 10] FIG. 10 is a view illustrating another example of the light distribution pattern of the low beam similarly to FIG. 8.
[FIG. 11] FIG. 11 is a view for describing generation of a high-beam image.
[FIG. 12] FIG. 12 is a view illustrating an example of a light distribution pattern of a high beam in the present embodiment similarly to FIG. 8.
[FIG. 13] FIG. 13 is a view illustrating an example of movement of the high mask image similarly to FIG. 9.
[FIG. 14] FIG. 14 is a view illustrating another example of the light distribution pattern of the high beam similarly to FIG. 12.
[FIG. 15] FIG. 15 is a view illustrating a low mask image in a modification example.

### Description of Embodiments

Hereinafter, a preferred embodiment of a vehicle headlamp according to the present invention will be described in detail with reference to the drawings. The embodiments exemplified below are intended to facilitate understanding of the present invention and are not intended to limit the present invention. The present invention can be modified and improved within the scope of the claims without departing from the scope thereof. In addition, in the present invention, constituent elements in the following embodiments may be appropriately combined. Note that in the drawings referred to below, dimensions of each member may be changed for easy understanding. In addition, in the drawings, for the clarity, only some of similar constituent elements are denoted by reference signs, and some reference signs may be omitted.

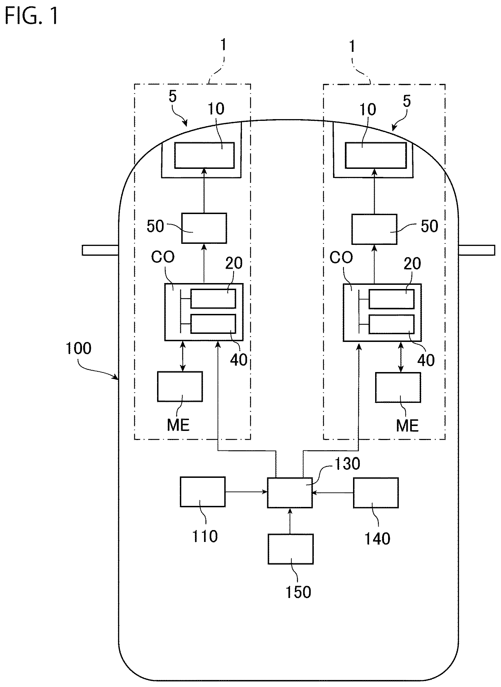

FIG. 1 is a plan view conceptually illustrating a vehicle including a vehicle headlamp according to an embodiment of the present invention. As illustrated in FIG. 1, a vehicle 100 is an automobile, and includes a pair of left and right vehicle headlamps 1, a light switch 110, an electronic control unit (ECU) 130, a steering sensor 140, and an inclination sensor 150. In the present specification, unless otherwise specified, "right" means the right side in the forward direction of the vehicle 100 that is the host vehicle, "left" means the left side in the forward direction, and a driver means the driver of the vehicle 100.

Each vehicle headlamp 1 includes a lamp portion 5, a control unit CO, a memory ME, and a power supply circuit 50 as main components. In general, the lamp portion 5 of one vehicle headlamp 1 is disposed on the left side of the front part of the vehicle 100, and the lamp portion 5 of the other vehicle headlamp 1 is disposed on the right side of the front part. The configuration of one vehicle headlamp 1 is the same as the configuration of the other vehicle headlamp 1 except that the shape of the lamp portion 5 is substantially symmetrical thereto. Therefore, one vehicle headlamp 1 will be described below, and the description of the other vehicle headlamp 1 will be omitted.

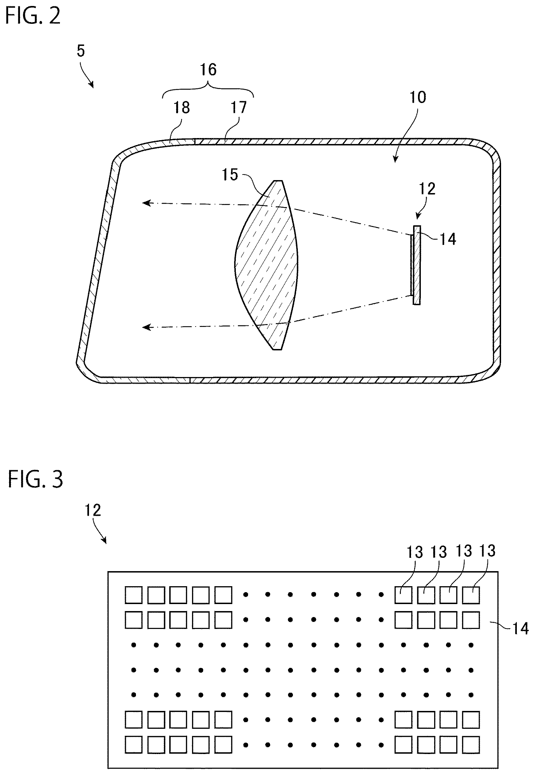

FIG. 2 is a cross-sectional view schematically illustrating the lamp portion 5. The lamp portion 5 mainly includes a lamp unit 10 and a casing 16.

The casing 16 mainly includes a housing 17 and a front cover 18. The front cover 18 transmits light emitted from the lamp unit 10. The housing 17 is configured in a box shape having an opening on the front side, and the front cover 18 is fixed to the housing 17 to close the opening. In this manner, an accommodation space surrounded by the housing 17 and the front cover 18 is formed in the casing 16, and the lamp unit 10 is disposed in the accommodation space. The lamp unit 10 mainly includes a light source unit 12 and a projection lens 15. The power supply circuit 50, the control unit CO, and the memory ME are disposed outside the casing 16, but may be disposed in the accommodation space of the casing 16.

FIG. 3 is a front view schematically illustrating the light source unit 12 illustrated in FIG. 2. As illustrated in FIG. 3, the light source unit 12 of the present embodiment includes a plurality of light emitting elements 13 as light emission units that emit light, and a circuit board 14 on which the plurality of light emitting elements 13 are mounted. The plurality of light emitting elements 13 are arranged in a matrix to form rows in the up-down direction and the right-left direction, and emit light forward. These light emitting elements 13 can individually change the light quantity of emitted light. In the present embodiment, the light emitting elements 13 are micro LEDs, and the light source unit 12 is a so-called micro LED array. The number of the light emitting elements 13 arranged in the right-left direction and the number of the light emitting elements 13 arranged in the up-down direction are not particularly limited. In addition, the type of the light emitting element 13 is not limited.

Such a light source unit 12 can form a predetermined light distribution pattern by selecting the light emitting element 13 that emits light. Furthermore, the light source unit 12 can adjust the intensity distribution of light in the predetermined light distribution pattern by adjusting the quantity of light emitted from each light emitting element 13. Therefore, the light source unit 12 can emit light having a light distribution pattern corresponding to the light quantity of light emitted from the plurality of light emitting elements 13.

In the present embodiment, each light emitting element 13 corresponds to a pixel of an image generated by an image generation unit 20 which will be described later. The light source unit 12 adjusts the light quantity of light emitted from each light emitting element 13 in accordance with data of a pixel corresponding to this light emitting element 13, thereby emitting light based on this image, and forms a light distribution pattern based on this image by the light. In the present embodiment, the light emitting element 13 and the pixel correspond to each other in one-to-one correspondence, but are not particularly limited.

The projection lens 15 is disposed in front of the light source unit 12, light emitted from the light source unit 12 is incident thereon, and a divergence angle of the light is adjusted by the projection lens 15. Therefore, light whose divergence angle is adjusted by the projection lens 15 is emitted from the lamp unit 10, and irradiation with the light is performed from the lamp portion 5 ahead of the vehicle 100 via the front cover 18. The projection lens 15 of the present embodiment is a lens in which a light incidence surface and a light emission surface are formed in a protruding shape, and the rear focal point of the projection lens 15 is located on or near the light emission surface of any one of the light emitting elements 13 in the light source unit 12. Therefore, the light distribution pattern of the light with which irradiation is performed ahead of the vehicle 100 is a light distribution pattern in which the light distribution pattern of light emitted from the light source unit 12 is inverted up and down, and right and left, and an image representing this light distribution pattern is an image obtained by inverting the image representing the light distribution pattern of the light emitted from the light source unit 12 up and down, and right and left.

The memory ME illustrated in FIG. 1 is configured to be able to store information and read the stored information. The memory ME is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except for a transitory propagating signal (transitory, propagating signal), and does not exclude a volatile recording medium. Various programs for controlling the lamp unit 10 and information necessary for the control are stored in the memory ME, and the control unit CO reads the programs and information stored in the memory ME.

The control unit CO includes, for example, an integrated circuit such as a microcontroller, an integrated circuit (IC), a large-scale integrated circuit (LSI), or an application specific integrated circuit (ASIC), or a numerical control (NC) device. In addition, when the NC device is used, the control unit CO may use a machine learning device or may not use a machine learning device. The control unit CO is electrically connected to the ECU 130, and in each vehicle headlamp 1, the control units CO are electrically connected to each other via the ECU 130. Note that the control units CO may be electrically directly connected to each other without the ECU 130.

The control unit CO of the present embodiment includes an image generation unit 20 and a light distribution control unit 40 in a state where various programs are read from the memory ME.

The image generation unit 20 of the present embodiment generates an image based on a plurality of images stored in the memory ME. In the present embodiment, signals from the light switch 110, the steering sensor 140, and the inclination sensor 150 which will be described later are input to the image generation unit 20, and the image generation unit 20 generates an image by combining a plurality of images stored in the memory ME in accordance with these signals. Note that information of the image stored in the memory ME may be read from a memory outside the vehicle via a wireless communication device provided in the vehicle 100.

The images stored in the memory ME of the present embodiment are a low mask image and a high mask image as mask images, and a low base image and a high base image as base images. These images are grayscale images in which data of each pixel in each image is a gray value, and a pixel having a larger gray value is brighter. However, the data of each pixel is not particularly limited.

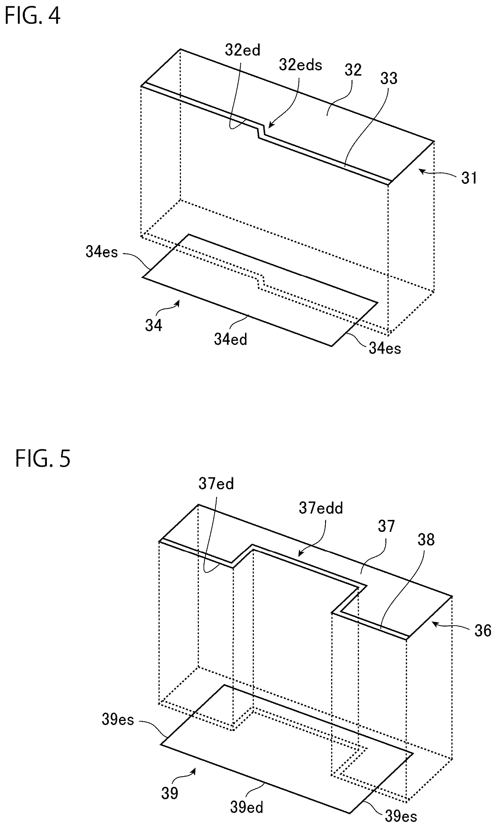

FIG. 4 is a view for describing the low mask image and the low base image. A low mask image 31 is an image that is superimposed on and covers the upper portion of the low base image 34. In the present embodiment, the low mask image 31 crosses the upper portion of the low base image 34 and includes a light-shielding image 32 and a blurred image 33. The brightness of the light-shielding image 32 is zero, and a lower edge 32ed of the light-shielding image 32 has a step portion 32eds. The blurred image 33 extends along the lower edge 32ed of the light-shielding image 32. The width of the blurred image 33 in a direction perpendicular to the extending direction of the blurred image 33 is constant, but may not be constant. The brightness of the blurred image 33 decreases from the side opposite to the light-shielding image 32 toward the light-shielding image 32 side.

The low base image 34 is an image that becomes an image representing a light distribution pattern of a low beam as a predetermined light distribution pattern when the low mask image 31 is superimposed on the upper portion. A cutoff line which is the upper edge of the light distribution pattern of the low beam corresponds to the lower edge 32ed of the light-shielding image 32. Since the lower edge 32ed has the step portion 32eds, the cutoff line also has a step portion corresponding to the step portion 32eds, and an elbow point as a predetermined characteristic portion is formed in the cutoff line. That is, the lower edge 32ed corresponds to the cutoff line of the light distribution pattern of the low beam having the elbow point. In the present embodiment, the brightness of the low base image 34 is a predetermined brightness except for the vicinity of left and right edges 34es and a lower edge 34ed, and is brighter than the brightness of the blurred image 33. In addition, the brightness in the vicinity of the left and right edges 34es and the lower edge 34ed is darker than the predetermined brightness and becomes lower toward the outside. Note that the entire low base image 34 may have predetermined brightness.

FIG. 5 is a view for describing a high mask image and a high base image. A high mask image 36 is an image that is superimposed on and covers the upper portion of the high base image 39. In the present embodiment, the high mask image 36 crosses the upper portion of a high base image 39 and includes a light-shielding image 37 and a blurred image 38. The brightness of the light-shielding image 37 is zero, and a lower edge 37ed of the light-shielding image 37 has a recess 37edd recessed upward. The blurred image 38 extends along the lower edge 37ed of the light-shielding image 37. The width of the blurred image 38 in the direction perpendicular to the extending direction of the blurred image 38 is constant, but may not be constant. The brightness of the blurred image 38 decreases from the side opposite to the light-shielding image 37 toward the light-shielding image 37 side.

The high base image 39 is an image that becomes an image representing a light distribution pattern of a high beam as a predetermined light distribution pattern when the high mask image 36 is superimposed on the upper portion. The upper edge of the light distribution pattern of the high beam corresponds to the lower edge 37ed of the light-shielding image 37. Since the lower edge 37ed has the recess 37edd, a protruding portion as a characteristic portion corresponding to the recess 37edd is formed at the upper edge of the light distribution pattern of the high beam. Therefore, the light distribution pattern of the high beam includes an upper light distribution pattern whose outer edge is a protruding portion and a lower light distribution pattern. The upper light distribution pattern is connected to the upper edge of the lower light distribution pattern, and the width of the upper light distribution pattern in the right-left direction is narrower than that of the lower light distribution pattern. That is, the lower edge 37ed corresponds to the upper edge of such a light distribution pattern of a high beam. In the present embodiment, the brightness of the high base image 39 is predetermined brightness except for the vicinity of left and right edges 39es and a lower edge 39ed, and is brighter than the brightness of the blurred image 38. In addition, the brightness in the vicinity of the left and right edges 39es and the lower edge 39ed is darker than the predetermined brightness and becomes lower toward the outside. Note that the entire high base image 39 may have predetermined brightness, and the high base image 39 and the low base image 34 may be the same.

The light distribution control unit 40 illustrated in FIG. 1 controls the lamp unit 10 by controlling the power supply circuit 50 based on the information of the image generated by the image generation unit 20.

The power supply circuit 50 includes a driver, and when a control signal is input from the control unit CO, power supplied from a power supply (not illustrated) to each light emitting element 13 of the light source unit 12 is adjusted by the driver. In the present embodiment, the light emitting element 13 corresponding to a pixel having a larger gray value is supplied with a larger amount of power. Furthermore, a driver of the power supply circuit 50 adjusts the power supplied to each light emitting element 13 by pulse width modulation (PWM) control, thereby adjusting the light quantity of light emitted from each light emitting element 13. However, a method of adjusting the light quantity of light emitted from each light emitting element 13 is not particularly limited.

The light switch 110 of the present embodiment is a switch that selects one of emission of a low beam, emission of a high beam, and non-emission of light. When the emission of the low beam or the emission of the high beam is selected, the light switch 110 outputs a signal indicating the selected state to the control unit CO via the ECU 130. In addition, the light switch 110 does not output a signal when non-emission of light is selected.

The steering sensor 140 is a sensor that detects a steering angle of the vehicle 100. The steering sensor 140 detects a steering angle from, for example, a rotation angle of a steering wheel of the vehicle 100. The steering sensor 140 detects the right steering angle and the left steering angle while identifying the right steering angle and the left steering angle as different steering angles, and outputs a signal indicating the detected steering angle to the control unit CO via the ECU 130. In the present embodiment, the left steering angle is set to a negative value, and the right steering angle is set to a positive value.

The inclination sensor 150 is a sensor that detects an inclination angle in the pitch direction of the vehicle 100 with respect to the road surface. The inclination sensor 150 outputs a signal indicating the detected inclination angle to the control unit CO via the ECU 130. Examples of the configuration of the inclination sensor 150 include a configuration using a vehicle height sensor and a configuration using a gyro sensor. In the present embodiment, the inclination angle inclined downward is set to a negative value, and the inclination angle inclined upward is set to a positive value.

Next, the operation of the vehicle headlamp 1 of the present embodiment will be described. In the present embodiment, the operations of the pair of vehicle headlamps 1 are the same and synchronized with each other. Therefore, the operation of one vehicle headlamp 1 will be described below, and the description of the operation of the other vehicle headlamp 1 will be omitted.

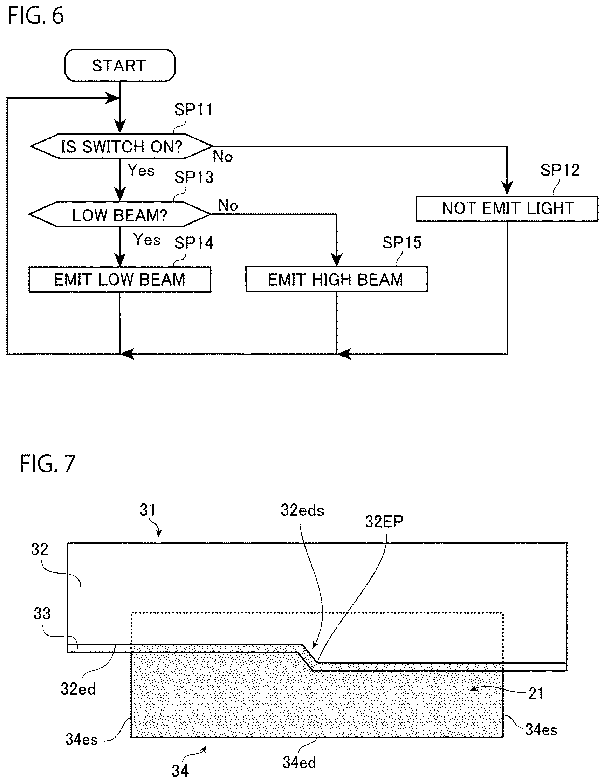

FIG. 6 is a control flowchart of the control unit CO in the present embodiment. As illustrated in FIG. 6, the control flow includes Steps SP11 to SP15. In the starting state illustrated in FIG. 6, it is assumed that signals are input to the control unit CO from the steering sensor 140 and the inclination sensor 150.

### (Step SP11)

In this step, the control unit CO causes the control flow to proceed to Step SP12 when no signal is input from the light switch 110, and the control unit CO causes the control flow to proceed to Step SP13 when this signal is input.

### (Step SP12)

In this step, the light distribution control unit 40 in the control unit CO controls the power supply circuit 50 so as not to emit light from the lamp unit 10. As a result, the vehicle headlamp 1 does not emit light. Then, the control unit CO returns the control flow to Step SP11.

### (Step SP13)

In this step, when the signal related to the emission of the low beam is input from the light switch 110, the control unit CO causes the control flow to proceed to Step SP14. In addition, when the signal related to the emission of a high beam is input from the light switch 110, the control unit CO causes the control flow to proceed to Step SP15.

### (Step SP14)

In this step, the control unit CO controls the lamp unit 10 such that a low beam is emitted from the vehicle headlamp 1. In the present embodiment, first, the image generation unit 20 generates a low-beam image representing a light distribution pattern of a low beam based on the low mask image 31 and the low base image 34 stored in the memory ME.

FIG. 7 is a view for describing generation of a low-beam image. As illustrated in FIG. 7, the image generation unit 20 superimposes the low mask image 31 on the upper portion of the low base image 34. Then, the image generation unit 20 sets a region where the low mask image 31 is superimposed in the low base image 34 as an image of a part corresponding to the region in the low mask image 31. Since the light-shielding image 32 of the low mask image 31 has brightness of zero, the upper edge of the low base image 34 has a shape corresponding to the lower edge 32ed of the light-shielding image 32 of the superimposed low mask image 31. Therefore, the low base image 34 becomes the low-beam image 21 representing the light distribution pattern of the low beam in which a cutoff line CL that is the upper edge has an elbow point as the predetermined characteristic portion. Note that, in FIG. 7, a part to be the low-beam image 21 is hatched with a plurality of dots. In this manner, the image generation unit 20 generates the low-beam image 21 representing the light distribution pattern of the low beam having the elbow point.

The light distribution control unit 40 controls the power supply circuit 50 based on the information of the low-beam image 21 to supply power to each light emitting element 13 of the light source unit 12. By the supply of power, the light source unit 12 emits light based on this image, and light having a light distribution pattern of a low beam is emitted from the vehicle headlamp 1. As described above, the image representing the light distribution pattern of the light with which irradiation is performed ahead of the vehicle 100 is an image obtained by inverting the image representing the light distribution pattern of the light emitted from the light source unit 12 up and down and right and left. In the present embodiment, an upper right pixel in the low-beam image 21 illustrated in FIG. 7 corresponds to the lower right light emitting element 13 illustrated in FIG. 3, a lower left pixel in the low-beam image 21 illustrated in FIG. 7 corresponds to the upper left light emitting element 13 illustrated in FIG. 3, and the correspondence relationship is inverted up and down. Therefore, the light distribution pattern of the low beam with which irradiation is performed ahead of the vehicle 100 is a light distribution pattern corresponding to the low-beam image 21 illustrated in FIG. 7. Note that the pixel of the image in the following drawings correspond to the light emitting element 13 similarly to the low-beam image 21 illustrated in FIG. 7.

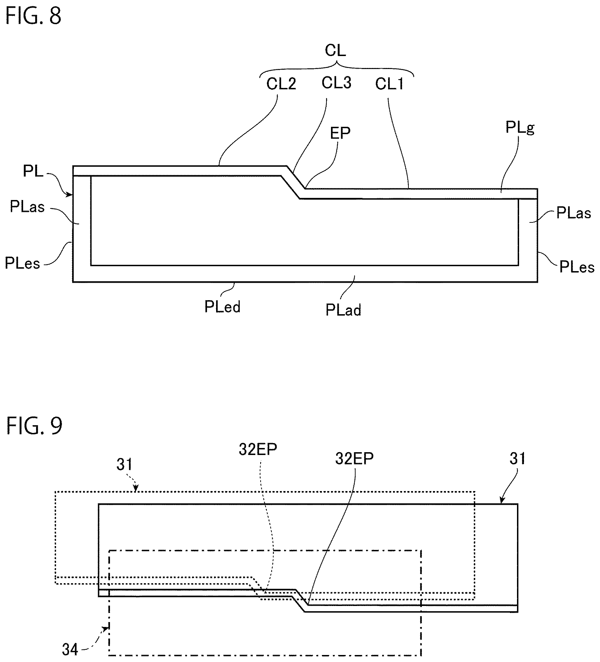

FIG. 8 is a view illustrating an example of the light distribution pattern of the low beam in the present embodiment, and is a view illustrating an example of a light distribution pattern PL of a low beam formed on a virtual vertical screen disposed 25 m ahead of the vehicle 100. The cutoff line CL that is an upper edge of the light distribution pattern PL of the low beam of the present embodiment corresponds to the lower edge 32ed of the light-shielding image 32 and has a step portion corresponding to the step portion 32eds of the lower edge 32ed, and an elbow point EP as a predetermined characteristic portion is formed in the cutoff line CL. Then, the cutoff line CL includes an inclined portion CL3 extending obliquely upward from the elbow point EP, a first horizontal portion CL1 extending in the horizontal direction from the elbow point EP, and a second horizontal portion CL2 extending in the horizontal direction from an end of the inclined portion CL3 opposite to the elbow point EP.

As described above, the low mask image 31 includes the blurred image 33 extending along the lower edge 32ed of the light-shielding image 32, and the brightness of the blurred image 33 decreases from the opposite side of the light-shielding image 32 toward the light-shielding image 32 side. Therefore, in the light distribution pattern PL of the low beam, a blurred region PLg that extends along the cutoff line CL and has brightness decreasing from the side opposite to the cutoff line CL side toward the cutoff line CL side is formed. As described above, the brightness of the low base image 34 is predetermined brightness except for the vicinity of both the left and right edges 34es and the lower edge 34ed, and the brightness in the vicinity of both the left and right edges 34es and the lower edge 34ed is darker than the predetermined brightness and becomes lower toward the outside. Therefore, the intensity of the light in the region excluding the vicinity of both left and right edges PLes and a lower edge PLed in the light distribution pattern PL of the low beam is predetermined intensity. In addition, the intensity of light in the regions in the vicinity of both the left and right edges PLes and the lower edge PLed is lower than a predetermined intensity and decreases outward. Here, a region in the vicinity of the edge PLes is an edge portion PLas extending along the edge PLes, and a region in the vicinity of the lower edge PLed is an edge portion PLad extending along the lower edge PLed.

As described above, the signal indicating the steering angle is input from the steering sensor 140, and the signal indicating the inclination angle is input from the inclination sensor 150 to the image generation unit 20. The image generation unit 20 changes the low mask image 31 such that the part 32EP corresponding to the elbow point in the lower edge 32ed of the light-shielding image 32 moves in a predetermined direction in accordance with the change in these signals. Specifically, the image generation unit 20 moves the part 32EP in a predetermined direction by moving the low mask image 31 in the predetermined direction.

FIG. 9 is a view illustrating an example of movement of the low mask image 31. In FIG. 9, the low base image 34 is indicated by a one-dot chain line, the low mask image 31 before movement is indicated by a dotted line, and the low mask image 31 after movement is indicated by a solid line. As described above, the left steering angle is set to a negative value, the right steering angle is set to a positive value, the inclination angle inclined downward is set to a negative value, and the inclination angle inclined upward is set to a positive value. The position of the part 32EP in the light-shielding image 32 with respect to the low base image 34 is set in advance in accordance with the steering angle and the inclination angle. As described above, the left steering angle is set to a negative value, the right steering angle is set to a positive value, the inclination angle inclined downward is set to a negative value, and the inclination angle inclined upward is set to a positive value. Assuming that the position of the part 32EP when the steering angle is zero and the inclination angle is zero is a reference position, the position of the part 32EP is on the right side of the reference position when the steering angle is a positive value, and as the steering angle is larger, the position is farther from the reference position. Further, this position is on the left side of the reference position when the steering angle is a negative value, and as the steering angle is smaller, the position is farther from the reference position. Further, this position is lower than the reference position when the inclination angle is a positive value, and as the inclination angle is larger, the position is farther from the reference position. In addition, this position is above the reference position when the inclination angle is a negative value, and as the inclination angle is smaller, the position is farther from the reference position. The image generation unit 20 of the present embodiment moves the low mask image 31 by a predetermined distance in a predetermined direction such that the part 32EP moves by a predetermined distance in a predetermined direction and becomes a position according to the steering angle and the inclination angle. The predetermined direction is a direction in accordance with a change in the steering angle and the inclination angle, the predetermined direction in a case where the steering angle increases is the right direction in FIG. 7, and the predetermined direction when the steering angle decreases is the left direction in FIG. 7. In addition, the predetermined direction when the inclination angle increases is the downward direction in FIG. 7, and the predetermined direction when the inclination angle decreases is the upward direction in FIG. 7. In addition, the predetermined distance is longer as the change amount of the steering angle or the inclination angle is larger.

The position of the low mask image 31 before movement indicated by a dotted line in FIG. 9 is the same as the position of the low mask image 31 illustrated in FIG. 7, and the part 32EP of the low mask image 31 before movement is located at the reference position. Then, in this state, for example, when the steering angle and the inclination angle increase, as illustrated in FIG. 9, the image generation unit 20 moves the low mask image 31 in the obliquely lower right direction to become the low mask image 31 indicated by the solid line. Although not illustrated, the image generation unit 20 moves the low mask image 31 in an obliquely upward left direction when the steering angle and the inclination angle decrease.

The image generation unit 20 of the present embodiment generates a plurality of low-beam images 21 while moving the low mask image 31 in a predetermined direction as described above. These low-beam images 21 include a low-beam image 21 in which the low mask image 31 is moving, and a low-beam image 21 when the movement is completed and the part 32EP is disposed at a position corresponding to the steering angle and the inclination angle. Note that the number of low-beam images 21 that are moving is not limited. The movement period is set to, for example, 1.0 s, and the time interval at which a plurality of low-beam images 21 are generated is set to, for example, 0.01 s, but these are not limited thereto. For example, there may be no low-beam image 21 in the middle of movement.

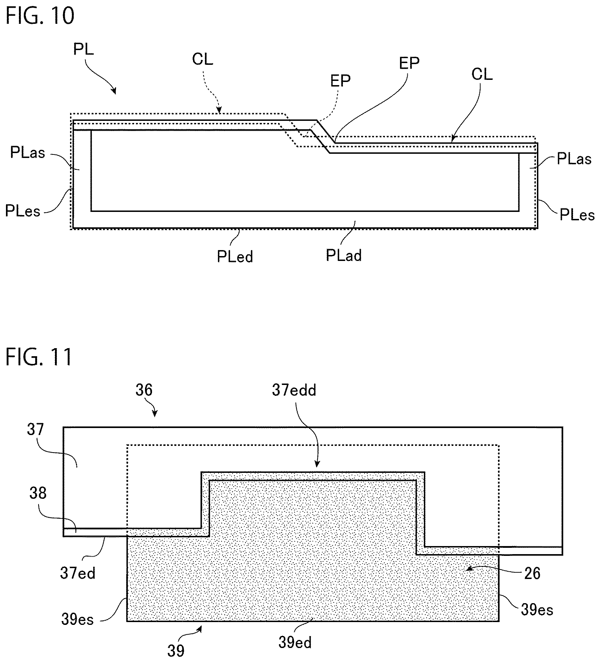

The light distribution control unit 40 controls the power supply circuit 50 based on the information of the plurality of low-beam images 21. Therefore, the light emitted from the light source unit 12 sequentially changes, and for example, the light distribution pattern of the emitted light gradually changes from the light distribution pattern of the low beam illustrated in FIG. 8 to the light distribution pattern of the low beam illustrated in FIG. 10. FIG. 10 is a view illustrating another example of the light distribution pattern of the low beam similarly to FIG. 8, and is a view illustrating an example of the light distribution pattern of the low beam when the steering angle and the inclination angle increase from zero. In FIG. 10, the light distribution pattern PL of the low beam before the change is indicated by a dotted line, and the light distribution pattern PL of the low beam before the change is slightly shifted up and down and right and left. In the present embodiment, the elbow point EP in the light distribution pattern PL of the low beam gradually moves diagonally downward to the right, so that the light distribution pattern of the low beam illustrated in FIG. 8 becomes the light distribution pattern of the low beam illustrated in FIG. 10. In the light distribution pattern PL of the low beam illustrated in FIG. 10, the brightness of both the left and right edge portions PLas and the lower edge portion PLad does not change from before the elbow point EP moves. That is, the light distribution control unit 40 controls the lamp unit 10 to move the elbow point EP as a predetermined characteristic portion without changing the brightness of both the left and right edge portions PLas and the lower edge portion PLad in the light distribution pattern PL of the low beam. When the steering angle decreases, the elbow point EP gradually moves to the left, and when the inclination angle increases, the elbow point EP gradually moves upward. Therefore, according to the vehicle headlamp 1 of the present embodiment, when the vehicle 100 travels on a curved road, the elbow point EP moves in a bending direction, and thus it is possible to improve the visibility of the curved road. In addition, according to the vehicle headlamp 1 of the present embodiment, even if the vehicle 100 is inclined in the pitch direction with respect to the road surface, the position of the elbow point EP with respect to the road surface can be prevented from changing, and the deterioration in visibility can be suppressed. When the low beam is emitted from the vehicle headlamp 1, the control unit CO returns the control flow to Step SP11.

### (Step SP15)

In this step, the control unit CO controls the lamp unit 10 such that a high beam is emitted from the vehicle headlamp 1. In the present embodiment, first, the image generation unit 20 generates a high-beam image representing a light distribution pattern of a high beam based on the high mask image 36 and the high base image 39 stored in the memory ME.

FIG. 11 is a view for describing generation of the high-beam image. As illustrated in FIG. 11, the image generation unit 20 superimposes the high mask image 36 on the upper portion of the high base image 39. Then, the image generation unit 20 sets a region where the high mask image 36 is superimposed in the high base image 39 as an image of a part corresponding to the region in the high mask image 36. Since the light-shielding image 37 of the high mask image 36 has brightness of zero, the upper edge of the high base image 39 has a shape corresponding to the lower edge 37ed of the light-shielding image 37 of the superimposed high mask image 36. Therefore, the high base image 39 becomes a high-beam image 26 representing a light distribution pattern of a high beam in which the upper edge has a protruding portion as the predetermined characteristic portion. Note that, in FIG. 11, a part to be the high-beam image 26 is hatched including a plurality of dots. The light distribution pattern of the high beam represented by the high-beam image 26 includes a lower light distribution pattern and an upper light distribution pattern whose outer edge is a protruding portion and connected to the upper edge of the lower light distribution pattern, and the width of the upper light distribution pattern in the right-left direction is narrower than that of the lower light distribution pattern. In this manner, the image generation unit 20 generates the high-beam image 26 representing the light distribution pattern of the high beam.

When the light distribution control unit 40 controls the power supply circuit 50 based on the information of the high-beam image 26, the light source unit 12 emits light based on this image, and light having a high beam light distribution pattern is emitted from the vehicle headlamp 1.

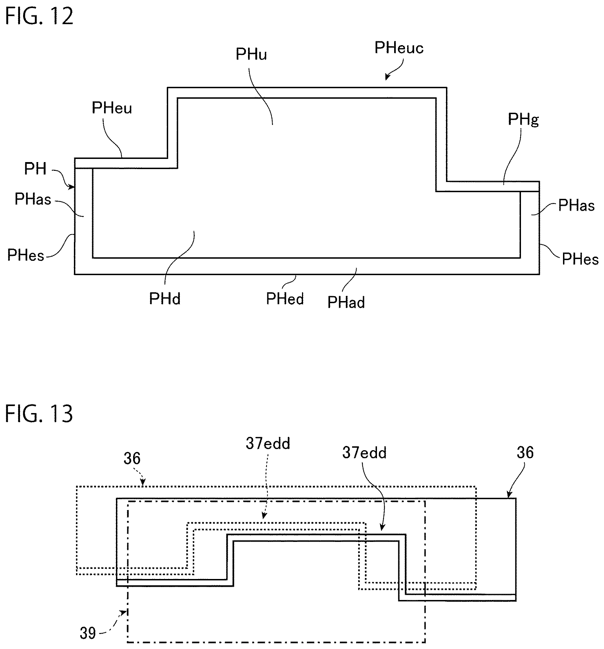

FIG. 12 is a view illustrating an example of the light distribution pattern of a high beam in the present embodiment similarly to FIG. 8. An upper edge PHeu of a light distribution pattern PH of a high beam of the present embodiment has a protruding portion PHeuc protruding upward corresponding to the recess 37edd at the lower edge 37ed of the light-shielding image 37. Then, the light distribution pattern PH of the high beam includes a lower light distribution pattern PHd and an upper light distribution pattern PHu whose outer edge is a protruding portion PHeuc, which is connected to the upper edge of the lower light distribution pattern PHd and whose width in the right-left direction is narrower than that of the lower light distribution pattern PHd. Further, in the present embodiment, a part on the left side of the protruding portion PHeuc in the upper edge PHeu is higher than the portion on the right side of the protruding portion PHeuc, but is not limited thereto.

As described above, the high mask image 36 includes the blurred image 38 extending along the lower edge 37ed of the light-shielding image 37, and the brightness of the blurred image 38 decreases from the opposite side of the light-shielding image 37 toward the light-shielding image 37 side. Therefore, in the light distribution pattern PH of the high beam, a blurred region PHg extending along the upper edge PHeu and having a brightness decreasing from the side opposite to the upper edge PHeu side toward the upper edge PHeu side is formed. As described above, the brightness of the high base image 39 is predetermined brightness except for the vicinity of the left and right edges 39es and the lower edge 39ed, and the brightness in the vicinity of the left and right edges 39es and the lower edge 39ed is darker than the predetermined brightness and becomes lower toward the outside. Therefore, the light intensity in the region excluding the vicinity of the left and right edges PHes and the lower edge PHed in the light distribution pattern PH of the high beam is predetermined intensity. In addition, the intensity of light in regions in the vicinity of the right and left edges PHes and the lower edges PHed is lower than a predetermined intensity and decreases toward the outside. Here, a region in the vicinity of the edge PHes is an edge portion PHas extending along the edge PHes, and a region in the vicinity of the lower edge PHed is an edge portion PHad extending along the lower edge PHed.

Note that, similarly to the case of generating the low-beam image 21, the image generation unit 20 changes the high mask image 36 in accordance with the steering angle and the inclination angle. Specifically, in accordance with the steering angle and the inclination angle, the image generation unit 20 changes the high mask image 36 such that the recess 37edd at the lower edge 37ed of the light-shielding image 37 corresponding to the protruding portion PHeuc at the upper edge PHeu of the light distribution pattern PH of the high beam as the predetermined characteristic portion moves in the predetermined direction.

FIG. 13 is a view illustrating an example of the movement of the high mask image 36 similarly to FIG. 9. Similarly to the position of the part 32EP with respect to the low base image 34, the position of the recess 37edd in the light-shielding image 37 with respect to the high base image 39 is set in advance in accordance with the steering angle and the inclination angle. Similarly to the position of the part 32EP, when the position where the steering angle is zero and the inclination angle is zero is set as the reference position, the position of the recess 37edd is on the right side of the reference position when the steering angle is a positive value, and as the steering angle is larger, the distance from the reference position becomes farther. Further, this position is on the left side of the reference position when the steering angle is a negative value, and as the steering angle is smaller, the position is farther from the reference position. Further, this position is lower than the reference position when the inclination angle is a positive value, and as the inclination angle is larger, the position is farther from the reference position. In addition, this position is above the reference position when the inclination angle is a negative value, and as the inclination angle is smaller, the position is farther from the reference position. The image generation unit 20 of the present embodiment moves the high mask image 36 by a predetermined distance in a predetermined direction such that the recess 37edd moves by a predetermined distance in a predetermined direction to be a position in accordance with the steering angle and the inclination angle. The predetermined direction is a direction in accordance with a change in the steering angle and the inclination angle, the predetermined direction when the steering angle increases is the right direction in FIG. 13, and the predetermined direction when the steering angle decreases is the left direction in FIG. 13. In addition, the predetermined direction when the inclination angle increases is the downward direction in FIG. 13, and the predetermined direction when the inclination angle decreases is the upward direction in FIG. 13. In addition, the predetermined distance is longer as the change amount of the steering angle or the inclination angle is larger.

The position of the high mask image 36 before the movement indicated by the dotted line in FIG. 13 is the same as the position of the high mask image 36 illustrated in FIG. 11, and the recess 37edd of the high mask image 36 before the movement is located at the reference position. Then, in this state, for example, when the steering angle and the inclination angle increase, the image generation unit 20 moves the high mask image 36 in the obliquely lower right direction to become the high mask image 36 indicated by the solid line as illustrated in FIG. 13. Although not illustrated, the image generation unit 20 moves the high mask image 36 in which the steering angle and the inclination angle decrease in the obliquely upward left direction.

The image generation unit 20 of the present embodiment generates a plurality of high-beam images 26 while moving the high mask image 36 in a predetermined direction in this manner. These high-beam images 26 include a high-beam image 26 in which the high mask image 36 is moving, and a high-beam image 26 when the movement is completed and the recess 37edd is disposed at a position corresponding to the steering angle and the inclination angle. Note that the number of high-beam images 26 that are moving is not limited. The movement period is set to, for example, 1.0 s, and the time interval at which a plurality of low-beam images 21 are generated is set to, for example, 0.01 s, but these are not limited thereto. For example, there may be no high-beam image 26 in the middle of movement.

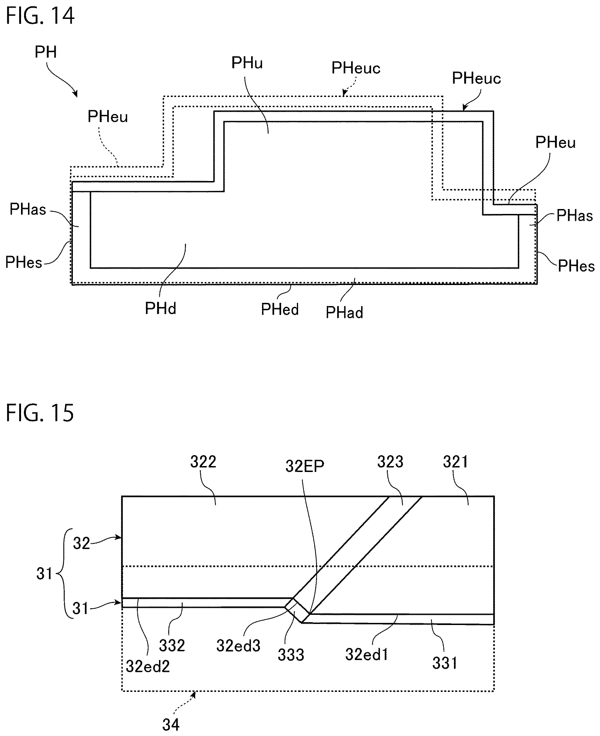

The light distribution control unit 40 controls the power supply circuit 50 based on the information of the plurality of high-beam images 26. Therefore, the light emitted from the light source unit 12 sequentially changes, and for example, the light distribution pattern of the emitted light gradually changes from the light distribution pattern of the high beam illustrated in FIG. 12 to the light distribution pattern of the high beam illustrated in FIG. 14. FIG. 14 is a view illustrating another example of the light distribution pattern of the high beam similarly to FIG. 12, and is a view illustrating an example of the light distribution pattern PH of the high beam when the steering angle increases from zero and the inclination angle decreases from zero. In FIG. 14, the light distribution pattern PH of the high beam before the change is indicated by a dotted line, and the light distribution pattern PH of the high beam before the change is slightly shifted up and down, and right and left. In the present embodiment, the protruding portion PHeuc in the light distribution pattern PH of the high beam gradually moves diagonally downward to the right, so that the light distribution pattern PH of the high beam illustrated in FIG. 12 becomes the light distribution pattern PH of the high beam illustrated in FIG. 14. In the light distribution pattern PH of the high beam illustrated in FIG. 14, the brightness of both the left and right edge portions PHas and the lower edge portion PHad does not change from before the protruding portion PHeuc moves. That is, the light distribution control unit 40 controls the lamp unit 10 to move the protruding portion PHeuc as the predetermined characteristic portion without changing the brightness of the left and right edge portions PHas and the lower edge portion PHad in the light distribution pattern PH of the high beam. When the steering angle decreases, the upper light distribution pattern PHu gradually moves to the left, and when the inclination angle increases, the upper light distribution pattern PHu gradually moves upward. Therefore, according to the vehicle headlamp 1 of the present embodiment, when the vehicle 100 travels on a curved road, the upper light distribution pattern PHu moves in the bending direction, so that the visibility of the curved road can be improved. In addition, according to the vehicle headlamp 1 of the present embodiment, even if the vehicle 100 is inclined in the pitch direction with respect to the road surface, the position of the upper light distribution pattern PHu with respect to the road surface can be prevented from changing, and the deterioration in visibility can be suppressed. When the high beam is emitted from the vehicle headlamp 1, the control unit CO returns the control flow to Step SP11.

In this manner, in the vehicle headlamp 1 of the present embodiment, the light distribution pattern PL of the low beam and the light distribution pattern PH of the high beam change according to the steering angle and the inclination angle of the vehicle 100.

As described above, the vehicle headlamp 1 of the present embodiment includes the image generation unit 20 and the light source unit 12. The image generation unit 20 generates the low-beam image 21 by superimposing the low mask image 31 on the low base image 34. The low mask image 31 includes a light-shielding image 32 in which the cutoff line CL that is the upper edge has a lower edge 32ed corresponding to the cutoff line CL of the light distribution pattern PL of the low beam having the elbow point EP as a predetermined characteristic portion, and the brightness is zero. The low base image 34 becomes a low-beam image 21 representing a light distribution pattern PL of a low beam as the predetermined light distribution pattern by superimposing the low mask image 31 on the upper portion. In the light source unit 12, a plurality of light emitting elements 13 capable of individually changing the light quantity of emitted light is arranged in a matrix, and emits light based on the low-beam image 21 generated by the image generation unit 20. In addition, the image generation unit 20 superimposes the low mask image 31 on the upper portion of the low base image 34, and generates the low-beam image 21 by changing the low mask image 31 so that the part 32EP corresponding to the elbow point EP in the lower edge 32ed of the light-shielding image 32 moves in the predetermined direction. Therefore, according to the vehicle headlamp 1 of the present embodiment, the light distribution pattern PL of the low beam can be changed such that the elbow point EP moves in the predetermined direction. In addition, the portions other than the cutoff line CL in the light distribution pattern PL of the low beam are based on the low base image 34, and the low base image 34 does not change even if the low mask image 31 changes. Therefore, according to the vehicle headlamp 1 of the present embodiment, even if the light distribution pattern PL of the low beam changes such that the elbow point EP moves in the predetermined direction, it is possible to suppress a decrease in brightness in the vicinity of both the edges PLes in the right-left direction of the light distribution pattern PL of the low beam and in the vicinity of the lower edge PLed.

In the vehicle headlamp 1 of the present embodiment, the low mask image 31 extends along the lower edge 32ed of the light-shielding image 32, and includes the blurred image 33 in which the brightness decreases from the opposite side of the light-shielding image 32 toward the light-shielding image 32 side. Therefore, in the vehicle headlamp 1 of the present embodiment, the blurred region PLg that extends along the cutoff line CL and has brightness reduced from the side opposite to the cutoff line CL toward the cutoff line CL is formed in the light distribution pattern PL of the low beam. Therefore, according to the vehicle headlamp 1 of the present embodiment, as compared with the case where the blurred region PLg is not formed, it is possible to suppress the cutoff line CL from being clearly viewed, and it is possible to suppress the driver of the vehicle 100 from feeling annoyed with the movement of the elbow point EP. Note that the low mask image 31 may not include the blurred image 33, and may include only the light-shielding image 32.

In the vehicle headlamp 1 of the present embodiment, the image generation unit 20 generates the high-beam image 26 by superimposing the high mask image 36 on the high base image 39. The high mask image 36 includes a light-shielding image 37 having a brightness of zero. The lower edge 37ed of the light-shielding image 37 corresponds to the upper edge PHeu of the light distribution pattern PH of the high beam including the lower light distribution pattern PHd and the upper light distribution pattern PHu connected to the upper edge of the lower light distribution pattern PHd and having a width in the right-left direction narrower than that of the lower light distribution pattern PHd. The upper edge PHeu has a protruding portion PHeuc which is an outer edge of the upper light distribution pattern PHu as a predetermined characteristic portion. The high base image 39 becomes a high-beam image 26 representing a light distribution pattern PH of a high beam as a predetermined light distribution pattern by superimposing the high mask image 36 on the upper portion. The light source unit 12 emits light based on the high-beam image 26 generated by the image generation unit 20. In addition, the image generation unit 20 superimposes the high mask image 36 on the upper portion of the high base image 39, and changes the high mask image 36 such that the recess 37edd corresponding to the protruding portion PHeuc in the lower edge 37ed of the light-shielding image 37 moves in a predetermined direction to generate the high-beam image 26. Therefore, according to the vehicle headlamp 1 of the present embodiment, the light distribution pattern PH of the high beam can be changed such that the upper light distribution pattern PHu whose outer edge is the protruding portion PHeuc moves in a predetermined direction. In addition, portions other than the upper edge PHeu in the light distribution pattern PH of the high beam are based on the high base image 39, and the high base image 39 does not change even if the high mask image 36 changes. Therefore, according to the vehicle headlamp 1 of the present embodiment, even if the light distribution pattern PH of the high beam changes so that the upper light distribution pattern PHu whose outer edge is the protruding portion PHeuc moves in a predetermined direction, it is possible to suppress the decrease in brightness in the vicinity of both the edges PHes in the right-left direction of the light distribution pattern PH of the high beam and in the vicinity of the lower edge PHed.

In the vehicle headlamp 1 of the present embodiment, the high mask image 36 extends along the lower edge 37ed of the light-shielding image 37, and includes the blurred image 38 in which the brightness decreases from the opposite side of the light-shielding image 37 toward the light-shielding image 37 side. Therefore, in the vehicle headlamp 1 of the present embodiment, the blurred region PHg that extends along the upper edge PHeu and has brightness reduced from the side opposite to the upper edge PHeu toward the upper edge PHeu is formed in the light distribution pattern PH of the high beam. Therefore, according to the vehicle headlamp 1 of the present embodiment, it is possible to suppress the upper edge PHeu from being clearly viewed as compared with the case where the blurred region PHg is not formed, and it is possible to suppress the driver of the vehicle 100 from feeling annoyed about the movement of the upper light distribution pattern PHu whose outer edge is the protruding portion PHeuc. Note that the high mask image 36 may not include the blurred image 38, and may include only the light-shielding image 37.

In the vehicle headlamp 1 of the present invention, the light distribution control unit 40 controls the lamp unit 10 to move the elbow point EP as a predetermined characteristic portion in a predetermined direction without changing the brightness of the left and right edge portions PLas and the lower edge portion PLad in the light distribution pattern PL of the low beam. In addition, the light distribution control unit 40 controls the lamp unit 10 to move the protruding portion PHeuc as the predetermined characteristic portion in the predetermined direction without changing the brightness of the left and right edge portions PHas and the lower edge portion PHad in the light distribution pattern PH of the high beam.

Although the present invention has been described by taking the above-described embodiment as an example, the present invention is not limited thereto.

For example, in the above embodiment, the image generation unit 20 that generates the low-beam image 21 representing the light distribution pattern PL of the low beam in which the cutoff line CL has the elbow point EP and the high-beam image 26 representing the light distribution pattern PH of the high beam in which the upper edge PHeu has the protruding portion PHeuc has been described as an example. However, the image generation unit 20 only needs to generate an image representing a predetermined light distribution pattern in which the upper edge has a predetermined characteristic portion, and the predetermined light distribution pattern and the predetermined characteristic portion are not limited, and the predetermined characteristic portion may include at least a part non-parallel to the horizontal direction.

In the above embodiment, the image generation unit 20 that moves the low mask image 31 to generate the low-beam image 21 and moves the high mask image 36 to generate the high-beam image 26 has been described as an example. However, the image generation unit 20 only needs to generate the low-beam image 21 by changing the low mask image 31 so that the part 32EP at the lower edge 32ed of the light-shielding image 32 as a predetermined characteristic portion moves in a predetermined direction, and may generate the low-beam image 21 by deforming the low mask image 31. Furthermore, the image generation unit 20 only needs to generate the high-beam image 26 by changing the high mask image 36 such that the recess 37edd at the lower edge 37ed of the light-shielding image 37 as the predetermined characteristic portion moves in a predetermined direction, and may generate the high-beam image 26 by deforming the high mask image 36. In addition, the predetermined direction in which the part 32EP or the recess 37edd as the predetermined characteristic portion moves is not limited, and may be only the up-down direction or only the right-left direction.

In the above embodiment, the image generation unit 20 that changes the low mask image 31 and the high mask image 36 as mask images according to the steering angle and the inclination angle has been described as an example. However, the information for changing the mask image by the image generation unit 20 is not limited. For example, the image generation unit 20 may change the mask image such that the predetermined characteristic portion moves in the right-left direction according to the blinking state of the left and right turn lamps provided in the vehicle 100. In this case, the light distribution control unit 40 controls the lamp unit 10 according to the blinking state of the turn lamp, and moves the predetermined characteristic portion in the right-left direction without changing the brightness of both the left and right edge portions and the lower edge portion in the predetermined light distribution pattern.

In the above embodiment, the vehicle headlamp 1 including the memory ME in which the low mask image 31 and the high mask image 36 as mask images and the low base image 34 and the high base image 39 as base images are stored has been described as an example. However, these images may be generated by the image generation unit 20, and the low-beam image 21 and the high-beam image 26 may be generated based on these images generated by the image generation unit 20. For example, when the image generation unit 20 generates the low mask image 31, the low mask image 31 may be an image as illustrated in FIG. 15.

FIG. 15 is a view illustrating a low mask image in a modification example. In FIG. 15, a low base image 34 is indicated by a dotted line. In the present modification example, as in the above embodiment, the low mask image 31 includes a light-shielding image 32 and a blurred image 33. The light-shielding image 32 includes a first part 321, a second part 322, and a third part 323. The shape of the first part 321 is a quadrangle having a part 32ed1 corresponding to the first horizontal portion CL1 of the cutoff line CL in the lower edge 32ed of the light-shielding image 32 as one side. The shape of the second part 322 is a quadrangle having a part 32ed2 corresponding to the second horizontal portion CL2 of the cutoff line CL in the lower edge 32ed as one side. The shape of the third part 323 is a quadrangle having a part 32ed3 corresponding to the inclined portion of the cutoff line CL in the lower edge 32ed as one side. The third part 323 is located between the first part 321 and the second part 322 and is connected to the first part 321 and the second part 322. A side shared by the third part 323 and the first part 321 and a side shared by the third part 323 and the second part 322 are perpendicular to the part 32ed3. The blurred image 33 includes a first blurred portion 331 along the part 32ed1 which is one side of the first part 321, a second blurred portion 332 along a part 32ed2 which is one side of the second part 322, and a third blurred portion 333 along a part 32ed3 which is one side of the third part 323. In the present modification example, the pair of opposite sides of the third blurred portion 333 is located on an extension line of the pair of opposite sides of the third part 323. The image generation unit 20 of the present modification example generates such a low mask image 31, and generates a low-beam image 21 by superimposing the low mask image 31 on the low base image 34. In the present modification example, the image generation unit 20 can form the light-shielding image 32 by forming the first part 321, the second part 322, and the third part 323 each having a quadrangular shape. In addition, the image generation unit 20 can form the blurred image 33 by forming the first blurred portion 331, the second blurred portion 332, and the third blurred portion 333 each having a rectangular shape. Therefore, the light-shielding image 32 and the blurred image 33 can be easily formed, and the calculation load of the image generation unit 20 can be reduced.

In addition, the base image may be an image that becomes an image representing a predetermined light distribution pattern by superimposing the mask image on the upper portion, and the low base image 34 and the high base image 39 are not limited. For example, the low base image 34 may be the high-beam image 26 of the above embodiment. In addition, the low-beam image 21 and the high-beam image 26 may be stored in the memory ME. In this case, the image generation unit 20 may generate the low-beam image 21 in which the part 32EP corresponding to the elbow point EP is moved in the up-down direction by moving the low-beam image 21 in the up-down direction, and generate the low-beam image 21 in which the part 32EP is moved in the right-left direction based on the low mask image 31 and the low base image 34. In addition, the image generation unit 20 may generate the high-beam image 26 in which the recess 37edd corresponding to the protruding portion PHeuc is moved in the up-down direction by moving the high-beam image 26 in the up-down direction, and generate the high-beam image 26 in which the recess 37edd is moved in the right-left direction based on the high mask image 36 and the high base image 39.

Furthermore, in the above-described embodiment, the light source unit 12 including the plurality of light emitting elements 13 capable of individually changing the light quantity of emitted light has been described as an example. However, the light source unit 12 may include a plurality of light emission units capable of individually changing the light quantity of emitted light, and may emit light based on the image generated by the image generation unit 20. For example, the light source unit 12 may include a digital mirror device (DMD) including a plurality of reflective elements arranged in a matrix and a light irradiation unit that irradiates the DMD with light. The DMD can adjust the light quantity of light emitted in a predetermined direction from the reflective surface of each reflective element, and can convert the light emitted in the predetermined direction from each reflective element into light based on the image generated by the image generation unit 20. Therefore, it can be understood that the reflective surface of each reflective element corresponds to the light emission unit.

In the above embodiment, the vehicle 100 including the pair of vehicle headlamps 1 including the control unit CO and the memory ME has been described as an example. However, at least one of the control unit CO and the memory ME may be shared by the pair of vehicle headlamps 1. Further, the signals output from the light switch 110, the steering sensor 140, and the inclination sensor 150 provided in the vehicle 100 may be input to the control unit CO without passing through the ECU 130 of the vehicle 100. In addition, the vehicle provided with the vehicle headlamp 1, the number of vehicle headlamps 1 provided in the vehicle, and the like are not particularly limited. For example, when the vehicle is a two-wheeled vehicle, the number of vehicle headlamps 1 may be one.

According to the present invention, there is provided a vehicle headlamp capable of suppressing a decrease in brightness when the light distribution pattern is changed such that the predetermined characteristic portion of the upper edge moves, and the vehicle headlamp can be used in the field of vehicle headlamps such as automobiles.

## Claims

1. A vehicle headlamp comprising:
an image generation unit that generates an image by superimposing a mask image on an upper portion of a base image as the image representing a predetermined light distribution pattern by superimposing the mask image on the upper portion, the mask image including a light-shielding image that has a brightness of zero, and has a lower edge corresponding to an upper edge of the predetermined light distribution pattern in which the upper edge has a predetermined characteristic portion; and
a light source unit that emits light based on the image generated by the image generation unit, the light source unit in which a plurality of light emission units capable of individually changing a light quantity of emitted light are arranged in a matrix, wherein
the image generation unit generates the image by superimposing the mask image on the upper portion of the base image and changing the mask image such that a part corresponding to the predetermined characteristic portion in the lower edge of the light-shielding image moves in a predetermined direction.

2. The vehicle headlamp according to claim 1, wherein
the image generation unit generates the mask image and superimposes the mask image on the base image.

3. The vehicle headlamp according to claim 1, wherein
the predetermined light distribution pattern is a light distribution pattern of a low beam, and
the predetermined characteristic portion is an elbow point.

4. The vehicle headlamp according to claim 3, wherein
the upper edge includes an inclined portion that extends obliquely upward from the elbow point, a first horizontal portion that extends in a horizontal direction from the elbow point, and a second horizontal portion that extends in the horizontal direction from an end of the inclined portion opposite to the elbow point,
the light-shielding image includes a first part of a quadrangle having, as a side, a part corresponding to the first horizontal portion in the lower edge of the light-shielding image, a second part of a quadrangle having, as a side, a part corresponding to the second horizontal portion in the lower edge of the light-shielding image, and a third part of a quadrangle that is connected to the first part and the second part and has, as a side, a part corresponding to the inclined portion in the lower edge of the light-shielding image, and
the image generation unit generates the mask image and superimposes the mask image on the base image.

5. The vehicle headlamp according to claim 1, wherein
the predetermined light distribution pattern is a light distribution pattern of a high beam including a lower light distribution pattern and an upper light distribution pattern that is connected to an upper edge of the lower light distribution pattern and has a width in a right-left direction narrower than that of the lower light distribution pattern, and
the predetermined characteristic portion is a protruding portion as an outer edge of the upper light distribution pattern.

6. The vehicle headlamp according to any one of claims 1 to 5, wherein
the mask image includes a blurred image that extends along the lower edge of the light-shielding image and has brightness decreasing from a side opposite to the light-shielding image toward the light-shielding image side.

7. A vehicle headlamp comprising:
a lamp unit that emits light having a predetermined light distribution pattern in which an upper edge has a predetermined characteristic portion; and
a control unit that controls the lamp unit, wherein
the control unit controls the lamp unit to move the predetermined characteristic portion in a predetermined direction without changing brightness of both right and left edge portions and a lower edge portion in the predetermined light distribution pattern.
